# EUROPEAN PATENT SPECIFICATION

(11) **EP 4 304 326 B1**
(45) Date of publication and mention of the grant of the patent: **29.10.2025**
(21) Application number: 22709326.7
(22) Date of filing: 03.03.2022
(51) Int. Cl.: A01D 44/02, A01G 33/00

(54) **APPARATUS AND METHODS OF SEAWEED FARMING AND HARVESTING**
VORRICHTUNG UND VERFAHREN ZUR ALGENZUCHT UND ALGENERNTE
APPAREIL ET PROCÉDÉE DE CULTURE ET DE RÉCOLTE D'ALGUES

(30) Priority: 11.03.2021 US 202163159526 P; 24.03.2021 EP 21164612
(43) Date of publication of application: 17.01.2024
(73) Proprietor: International N&H Denmark ApS, 2800 Kongens Lyngby (DK)
(72) Inventor: ASK, Erick, Milton, Maine 02186 (US); HOPP, Leopoldo, Vargas, Comuna de Calbuco, 5570000 (CL)
(74) Representative: International N&H EMEA
(86) International application number: PCT/EP2022/055436
(87) International publication number: WO 2022/189260

(56) References cited:
- DE-A1- 102015 013 580
- JP-A- H07 155 085
- US-A1- 2005 048 080
- US-A1- 2016 270 292

## Description

### Field

The present disclosure relates to apparatus and methods of seaweed farming and harvesting, and improvements relating thereto.

### Background

Seaweed is an important food, beverage, pharmaceutical and industrial raw ingredient, and is also used throughout the world as part of gelling, thickening, binding and emulsification applications. In that respect therefore, effective harvesting apparatus are required which can farm seaweed so that it can be used in these applications. Conscious of this background, it has been found that existing techniques for farming seaweed can often be slow, labour intensive, and inefficient. In that respect therefore, described herein are seaweed farming and harvesting techniques, and improvements thereto, which have been found to make the harvesting process of seaweed more efficient; quicker; and more reliable all round.

An apparatus for stripping seaweed from a net is known from US 2016/027292 A1 comprising a frame with a panel mounted to the frame and comprising an aperture through the panel. A plurality of string members are attached across the aperture for separating the seaweed from a net. Another apparatus for stripping seaweed from a net is known from JP H07 155085 A. An apparatus for stripping seaweed from cleaning brushes for ponds is known from DE 10 2015 013580 A1.

### Summary

According to a first aspect of the present invention, there is provided an apparatus for stripping seaweed from a net in accordance with claim 1, wherein the apparatus comprises at least one harvest plate, wherein the harvest plate comprises at least one orifice extending through the harvest plate, wherein each orifice is configured to receive a respective net containing seaweed, and is configured to at least partially strip the seaweed from the respective net as the respective net is passed through the orifice; wherein each orifice comprises a respective release channel, which extends from the orifice to an edge of the harvest plate, for releasing and for inserting the net in and from the orifice.

According to a second aspect of the present invention, there is provided a method in accordance with claim 5. Further preferred embodiments are defined by the dependent claims.

It will be appreciated that features and aspects of the invention described above in relation to the first and other aspects of the invention are equally applicable to, and may be combined with, embodiments of the invention according to other aspects of the invention as appropriate, and not just in the specific combinations described above.

### Brief Description of the Drawings

Embodiments of the invention will now be described, by way of example only, with reference to the accompanying drawings, in which:
Figure 1A schematically shows one embodiment of a seaweed farm in water which has a cylindrical net extending between a first end and second end, in accordance with further aspects of the present disclosure.
Figure 1B Alternative farm module with 50 times 100m tube nets. Harvest trimaran in red (figure 1C) harvesting 5 tube nets on each side of main hull. Removable floating net cage 139 underneath the boat is seen.
Figure 1C Trimaran harvest vessel in side, front and top view with 5 harvest holes on one harvest plate on each side of main hull. Green channels to keep tube nets separated and in line. Operator may sit forward with good visibility of harvest action. Harvest falls at harvest plate into removable floating net cage 139 (figure 1D) under each outrigger. Bars 141 over vessel to guide floating rope array (which tube net is attached to) over the boat during harvest procedure.
Figure 1D Floating net cage 139 which preferably is at least 10m³ in order to hold 1,000kg of harvest. These can be attached and detached to/from the harvest trimaran very quickly.
Figure 1E Tug boat pulls floating net cages 139 of figures 1C and 1D to beach for unloading and the empty ones back to farm for reattachment to harvest trimaran. Tug can pull multiple net cages in a "train."
Figure 1F System for unloading filled floating nets 139. Near or at beach is a seaweed pump (P) that can be located on beach or on a floating platform near the beach. Seaweed is pumped out of floating net cages (figure 1D) either directly to processing facility or in to a trailer that is then towed by tractor to the drying facility.
Figure 1G Harvest plate with harvest holes (red in figure 1C) with "V" shaped guide and release plus "wings" to guide vertical attachment ropes from floating rope array through release slot. To be placed on harvest vessel of figure 1C.
Figure 2A schematically shows a top view of an apparatus for depositing seaweed onto a net, in accordance with further aspects of the present disclosure;
Figure 2B schematically shows a side view of the apparatus from Figure 2A;
Figure 2C schematically shows a front view of the apparatus from Figure 2A;
Figure 3A schematically shows a top view of an apparatus for loading a cylindrical net onto the external surface of a cylindrical member or cylindrical sleeve, in accordance with further aspects of the present disclosure;
Figure 3B schematically shows a side view of the apparatus from Figure 3A;
Figure 3C schematically shows a front view of the apparatus from Figure 3A;
Figure 3D relates to the disclosure from Figures 3A-3C, and shows a cylindrical net scrunched onto the cylindrical member/cylindrical sleeve from Figures 3A-3C, in accordance with aspects of the present disclosure
Figure 4A shows a perspective view of a harvest plate useable in an apparatus in one embodiment for at least partially stripping seaweed from a net comprising the seaweed, in accordance with some aspects of the present disclosure;
Figure 4B schematically shows a front view of an apparatus in one embodiment for at least partially stripping seaweed from a net comprising the seaweed, in accordance with some aspects of the present disclosure;
Figure 4C schematically shows a top view of a nautical craft in some embodiment, such as a raft or boat, which might comprise the apparatus from any of Figures 2A-4B, in accordance with further aspects of the present disclosure;
Figure 4D schematically shows a side view of the nautical craft from Figure 4C;
Figure 5 schematically shows an apparatus for farming seaweed in water which has a plurality of cylindrical nets extending between a first end and second end, in accordance with further aspects of the present disclosure;
Figure 6A schematically shows a top view of a nautical craft, such as a raft or boat, which might comprise the apparatus from any of Figures 2A-4B, in accordance with further aspects of the present disclosure; and
Figure 6B schematically shows a top view of a nautical craft, such as a raft or boat, which might comprise the apparatus from any of Figures 2A-4B, in accordance with further aspects of the present disclosure.

### Detailed Description

Aspects and features of certain examples and embodiments are discussed / described herein. Some aspects and features of certain examples and embodiments may be implemented conventionally and these are not discussed / described in detail in the interests of brevity. It will thus be appreciated that aspects and features of apparatus and methods discussed herein which are not described in detail may be implemented in accordance with any conventional techniques for implementing such aspects and features.

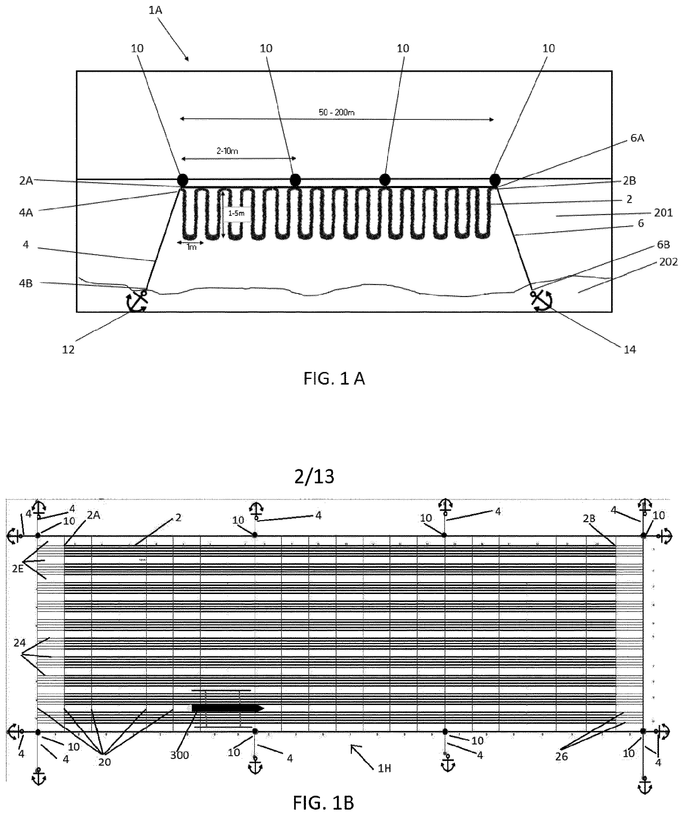

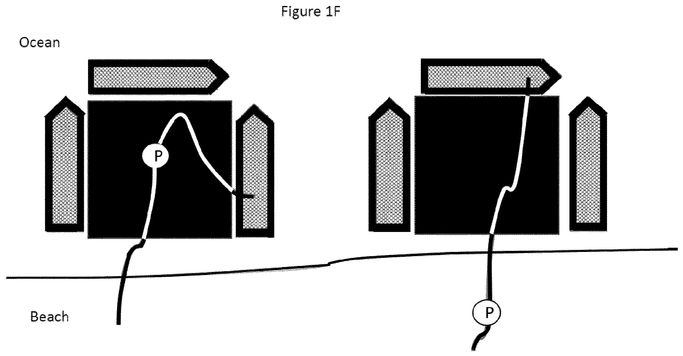

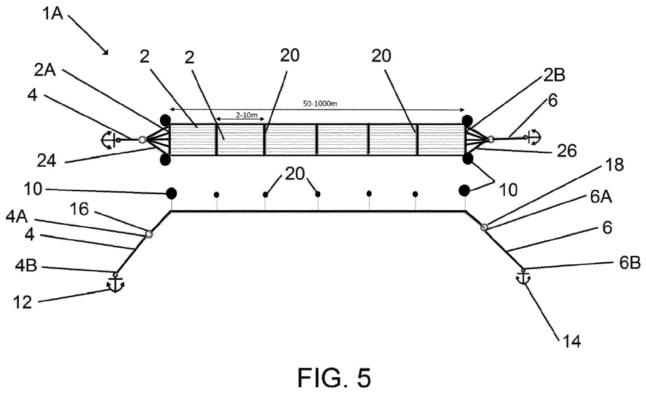

Starting with the disclosure of Figure 1A or 1B, and also the disclosure from Figure 5, provided herein is a seaweed farming construction 1A or 1H for farming seaweed in water. The seaweed farming construction comprises at least one cylindrical net 2 each extending between a first end 2A and second end 2B. The seaweed farming construction also comprises one or more weighted lines 4 or 6 for anchoring the first end 2A and second end 2B of each cylindrical net 2 to a water bed 202 and may comprise a second weighted line 6 for anchoring a second end 2B of each cylindrical net 2 to the water bed 202. For providing a buoyancy force onto the cylindrical, and to better prevent the cylindrical net 2 from sinking into the water 201, the seaweed farming construction may also comprise at least one buoyancy device 10 connected to the at least one cylindrical net 2 for supporting the at least one cylindrical net 2 in the water 201.

In accordance with some embodiments, such as those shown in Figures 1A and 5, the first weighted line 4 may comprise a first end 4A a second end 4B, wherein the first end 4A of the first weighted line 4 is connected to the first end 2A of each cylindrical net 2, and wherein the second end 4B of the first weighted line 4 comprises a first anchor 12 configured to rest on the water bed 202. In that way, this arrangement provides a particularly convenient arrangement for suitably anchoring each cylindrical net 2 in place when the seaweed farming construction 1A or 1H is use. In accordance with such embodiments, in some particular embodiments thereof, the seaweed farming construction 1A or 1H may additionally comprise the second weighted line 6 comprising a first end 6A a second end 6B, wherein the first end 6A of the second weighted line 6 is connected to the second end 2B of each cylindrical net 2, and wherein the second end 6B of the second weighted line 6 comprises a second anchor 14 configured to rest on the water bed 202. In accordance with such embodiments, by anchoring the cylindrical net via its first and second ends 2A;2B, such an arrangement conveniently frees up the middle portions of the net 2 to maximise the extent to which they can collect seaweed.

In certain instances, e.g. during collection of the seaweed from the cylindrical net 2, it may preferable for the cylindrical net 2 to be detachable from each weighted line 4;6 and/or the first anchor 12 or second anchor 14 (where present). Accordingly, in some embodiments, the first weighted line 4 may comprise a first fastening member 16 for releasably attaching the first end 4A of the first weighted line 4 to the first end 2A of the at least one cylindrical net 2. Similarly, in accordance with some embodiments, the second weighted line 6 may comprise a second fastening member 18 for releasably attaching the first end 6A of the second weighted line 6 to the second end 2B of the at least one cylindrical net 2.

In terms of the number of cylindrical nets which may be provided in the seaweed farming construction 1A or 1H, this will depend on the size and construction of the seaweed farming construction. In that respect for instance, in some embodiments such as the embodiment shown in Figure 1A, the seaweed farming construction may comprise a single cylindrical net 2, whereas in other embodiments (such as the embodiment of Figure 1B and 5) there may be provided a plurality of cylindrical nets 2. Where a plurality of cylindrical nets 2 is present, in accordance with some space saving embodiments, such as that shown in Figure 1B and 5, the plurality of cylindrical nets 2 may be parallel to each other.

In accordance with some embodiments where a plurality of cylindrical nets 2 is present (such as the embodiment of Figure 1B) there may be an arrangement of 1-5, such as 5 cylindrical nets 2 in parallel to each other, optionally with a space 2E between the cylindrical nets 2, which space may correspond to the size of the nautical craft comprising the apparatus according to the first aspect and/or the second aspect of the invention. In some embodiments the plurality of cylindrical nets 2 are organized as a sequential arrangement of 1-5, such as 5 cylindrical nets 2 in parallel to each other followed by a space 2E, then followed by 1-5, such as 5 cylindrical nets 2 in parallel to each other. In some embodiments such an arrangement may have 4-10 sets of 1-5, such as 5 cylindrical nets 2 in parallel to each other, each separated be a space 2E.

In accordance with some embodiments where a plurality of cylindrical nets 2 is present, in some of these embodiments, to reduce the likelihood of the cylindrical nets 2 from entangling with each other, the seaweed farming construction may comprise a plurality of spacer members 20 for spacing the plurality of cylindrical nets 2 apart from each other. In accordance with some embodiments where the spacer members 20 are present, the spacer members 20 may be configured to float in water, or be made of a material which floats in water, such to better support the cylindrical nets 2 in the water 201. The spacer members 20 may also be made of a rigid material to prevent them from being deflected by turbulence or waves in the water 201 when the seaweed farming construction is in use.

However when many cylindrical nets 2 are present, to maximise the space available between the first weighted line 4 and the second weighted line 6, in accordance with some embodiments (such as those shown in Figure 1A), the at least one cylindrical net 2 may be configured to adopt a raster pattern between the first end 2A and the second end 2B when the seaweed farming construction is deployed in water 201. In some embodiments (such as those shown in Figures 1A and 5), the at least one cylindrical net 2 may additionally or alternatively comprise a plurality of parallel portions which are configured to be parallel with each other when the seaweed farming construction is deployed in water 201.

When many cylindrical nets 2 are present, such as in an arrangement according to figure 1B, there may be 50-1000m, such as 100m of each cylindrical net configured to be parallel with each other, such as in a configuration with a space 2E for each 1-5, such as 5 cylindrical nets.

For a configuration as shown in Figure 1A, 1B or 5, to provide added support to each cylindrical net(s) 2 at its first end 2A and second end 2B, and to better maintain the overall structure of the seaweed farming construction 1A or 1H when it is in use, in accordance with some embodiments, the seaweed farming construction 1A or 1H may further comprise a first support member 24 for attaching the first end 2A of each cylindrical net 2, such as to the first end 4A of the first weighted line 4; and a second support member 26 for attaching the second end 2B of each cylindrical net 2, such as to the first end 6A of the second weighted line 6.

Turning to the at least one buoyancy device 10, it will be appreciated that the exact number and placement of the buoyancy device(s) will depend on the layout/structure of the seaweed farm of figures 1A,1B, or 5, and the extent of buoyancy forces required by the seaweed farming construction of figures 1A, 1B, or 5. In that respect therefore, there may be provided one or more buoyancy devices 10. Where the seaweed farming construction comprises a plurality of the buoyancy devices 10, in accordance with some embodiments thereof, the plurality of buoyancy devices 10 may extend and/or be located between weighted lines 4, such as a first weighted line 4 and a second weighted line 6. In embodiments where a more even distribution of buoyancy forces is required across the seaweed farming construction, in such embodiments the plurality of buoyancy devices 10 may comprise a regular spacing between each other.

Staying with the spacing between the plurality of buoyancy devices 10, in accordance with some embodiments the plurality of buoyancy devices 10 may comprise a spacing of between 1m-20m between neighbouring buoyancy devices 10. In such embodiments, and notionally others, the plurality of spacer members 20 may equally or alternatively comprise a spacing of between 1m-20m between neighbouring spacer members 20, as is shown in the embodiment of Figures 1B or 5.

With respect to some of the other principal dimensions for the seaweed farming construction 1A, 1H, such as those shown in Figures 1A, 1B, and 5, it will be appreciated these dimensions may depend on the intended size and scale of the seaweed farming construction 1A or 1H, along with the intended length of each cylindrical net 2. Though noting an intended application of the seaweed farming construction to be for harvesting a reasonable quantity of seaweed, in accordance with such embodiments, the first end 2A of each cylindrical net 2 may be separated from the second end 2B of the cylindrical net 2 by between 50m-1000m when the seaweed farming construction is in use in water 201. In some embodiments, e.g. when the cylindrical net 2 adopts a raster pattern between the first end 2A and the second end 2B (as shown in the embodiment of Figure 5), the first end 2A of each cylindrical net 2 might be separated from the second end 2B of the cylindrical net by a smaller amount, e.g. by between 50m-250m, when the seaweed farming construction is in use in water 201.

Thus described above is a convenient seaweed farming construction 1A or 1H which accommodates at least one cylindrical net 2 in which seaweed can grow in and around. Ultimately, once the cylindrical net 2 has been left in the water 201 for long enough, a sufficient quantity of seaweed will be present in each cylindrical net 2, with the seaweed projecting out from the centre of the cylindrical net through holes in the cylindrical net 2. At this stage, the cylindrical net 2 full of seaweed is then in a position to be harvested, as will be described in due course.

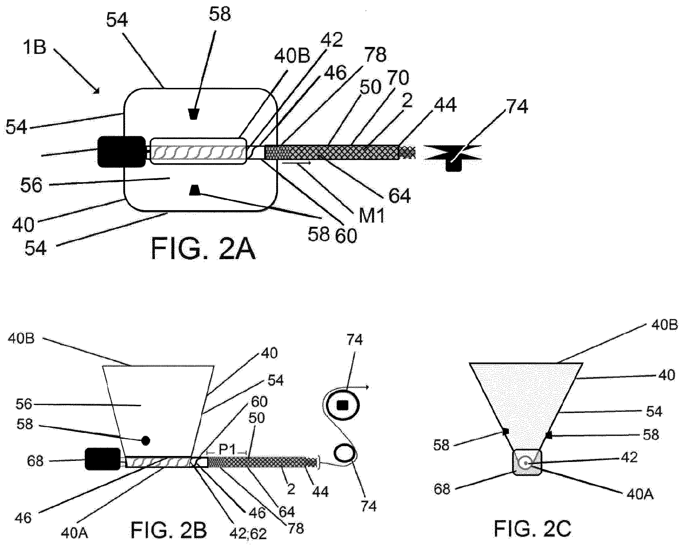

Appreciating the foregoing, to allow seaweed to grow in the cylindrical nets 2 in the first instance, it is usually beneficial to provide at least some initial seaweed in each cylindrical net 2, from which more seaweed can grow/propagate from. That being the case, prior to each cylindrical net 2 from the seaweed farming construction 1A or 1H being deposited into the water 201, what is needed is a way to effectively deposit this seaweed into the cylindrical net 2 in an even/efficient manner. This is provided with reference to the disclosure from Figures 2A-2C, which shows an apparatus 1B for depositing seaweed onto a net, such as the cylindrical net(s) shown in Figures 1A, 1B and 5.

In that respect therefore, and with reference to Figures 2A-2C, there may be provided an apparatus 1B for depositing seaweed onto a net, the apparatus comprising a hopper 40 for holding the seaweed, wherein the hopper 40 comprises an orifice 42. The apparatus 1B is further provided with an outlet 44 through which the seaweed is configured to be ejected from the apparatus 1B; and a conveying device 46 located at the orifice 42 of the hopper 40, wherein the conveying device 46 is configured to transport the seaweed from the orifice 42 of the hopper 40 towards the outlet 44. Also provided on the apparatus 1B is a locating member 50 for locating a net 2 next to the outlet 44, such that seaweed from the hopper 40 is configured to be deposited onto the net 2 as the seaweed is ejected from the outlet 44 by the conveying device 46.

During the operation of the apparatus 1B, as the seaweed is ejected from the outlet 44, the net 2 may be configured to be automatically or manually moved off the locating member 50, for instance in the direction of the arrow M1 which is shown in Figure 2A, such that the net 2 is progressively filled with seaweed as the seaweed continues to be ejected from the outlet 44, and as the net 2 continues to move off the locating member 50.

Conveniently therefore, the above effectively provides for an effective apparatus for depositing seaweed into the cylindrical net 2 in an efficient manner.

In accordance with some embodiments, the orifice 42 may be located towards a first end 40A of the hopper, and wherein the hopper comprises a second end 40B (which may be opposite the firs end 40A) and a plurality of side walls 54 extending between the first end 40A and the second end 40B, wherein the side walls 54 converge towards each other in the direction from the second end 40B to the first end 40A.

The hopper 40 effectively defines a cavity 56 for holding the seaweed, and may in accordance with some embodiments be configured such that the cavity 56 defines at least one of a frustum shape, a frusto-conical shape, and/or a funnel shape, and/or a shape which assists with the directing of the seaweed from the cavity 56 towards the orifice 42, as is the case for the embodiment shown in Figures 2A-2C. As to the size of the cavity 56, it will be appreciated that its size will depend on the intended application of the apparatus 1B. Though in accordance with some particular embodiments, which are well suited for larger scale seaweed harvesting operations, the cavity 56 may be sized to receive at least 100kg of seaweed.

To help keep any seaweed located in the hopper 40 suitably wet and healthy, in accordance with some embodiments the hopper 40 may comprise one or more water jets 58 for wetting the seaweed in the hopper 40. Such water jet(s) 58 in accordance with a very particular embodiment may be located on at least one of the side walls 54 of the hopper 40, as is shown in the embodiment of Figures 2A-2C.

Turning to the conveying device 46, it is intended that this be anything which can suitably transport the seaweed from the orifice 42 of the hopper 40 towards the outlet 44. This conveying device 46 might, for instance, be a conveyor belt, or could in accordance with some embodiments comprise an auger, as shown in the embodiment of Figures 2A-2C. To help direct the seaweed using the conveying device 46, in accordance with some embodiments, the conveying device may be located in a channel 60, wherein the channel 60 comprises a first opening 62 for receiving the seaweed from the orifice 42, and a second opening 64 for delivering the seaweed to the outlet 44.

In accordance with some embodiments, the apparatus 1B may be further provided with an actuating member 68 connected to, and for operating, the conveying device 46. It is envisaged that the actuating member may be automatic, such as by it comprising an electric motor, or in some embodiments may be manually operated - for instance by way of the actuating member 68 comprising a rotatable handle for operating the conveying device 46.

Where the actuating member 68 is employed, to help keep the actuating member 68 suitably spaced from the second opening 64 of the channel 60, the first opening 62 may be located between the actuating member 68 and the second opening 64, as is the case in the embodiment of Figures 2A-2C.

With respect to the locating member 50, it is intended that this be anything which can suitably locate the net 2, which might be a cylindrical net 2 (such as those shown in Figures 1A and 5), next to the outlet 44. Particularly where the net 2 is intended to be a cylindrical net 2, in accordance with some embodiments, such as that shown in Figures 2A-2C, the locating member 50 may comprises a cylindrical sleeve which extends around the outlet 44, wherein an outer surface 70 of the cylindrical sleeve is configured to receive the net 2.

Where the locating member 50 comprises the cylindrical sleeve, in some embodiments thereof, to provide added support thereto, the cylindrical sleeve may be configured to be located over at least a portion P1 of the channel 60 and/or located over the second opening 64 of the channel 60.

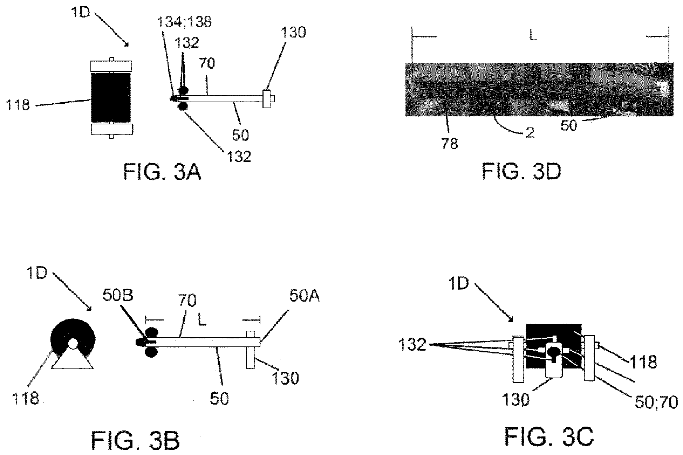

With respect to the locating member 50 as well, in accordance with some embodiments it is envisaged that the locating member 50 (which might be the cylindrical sleeve) may be detachable from channel 60 and/or the hopper 40. In that respect, and in a very particular embodiment, the locating member 50 may be configured to be slidably, and releasably, engageable over at least a portion P1 of the channel 60, as per the embodiment shown in Figures 2A-2C. By having the locating member 50 being detachable from other parts of the apparatus 1B, such as the channel 60 and/or the hopper 40, this conveniently allows for the locating member 50 to be moved to another location/apparatus (such as apparatus 1D shown in Figures 3A-3C) which might be better suited for loading the net 2 onto the locating member 50 in the first instance, as will be described. In this way, the locating member 50 can act as a cartridge which is configured to accommodate a respective net 2 which is loaded onto the cartridge.

As noted previously, during the operation of the apparatus 1B, as the seaweed is ejected from the outlet 44, the net 2 may be configured to be automatically or manually moved off the locating member 50, for instance in the direction of the arrow M1 which is shown in Figure 2A, such that the net 2 is progressively filled with seaweed as the seaweed continues to be ejected from the outlet 44, and as the net 2 continues to move off the locating member 50. Where the net 2 is configured to be automatically moved off the locating member 50, the apparatus may be further provided with a net moving mechanism 74 which is configured to move the net 2 relative to the locating member 50 as seaweed from the hopper 40 is deposited onto the net 2. In accordance with some embodiments, the net moving mechanism 74 may comprise at least one powered pulley or roller, as shown in Figures 2A-2C.

In accordance with some embodiments, to better ensure that the seaweed is more evenly distributed on the net 2, the net moving mechanism 74 (where employed) may be configured to move the net at the same speed as the conveying device 46.

As to how the net moving mechanism 74 may move the net, it is envisaged in some particular embodiments that the net moving mechanism may be configured to pull (or in other embodiments push) the net relative to the locating member 50 as seaweed from the hopper is deposited onto the net 1. In that respect, in accordance with some embodiments, the net 2 may be configured to comprise a scrunched up (compressed) portion 78 on the locating member 50. In this way, and where the net moving mechanism 74 is then employed, the net moving mechanism 74 may be then configured to additionally unscrunch (uncompress) the scrunched up (compressed) portion 78 of the net 2 as seaweed from the hopper 40 is deposited onto the net 2.

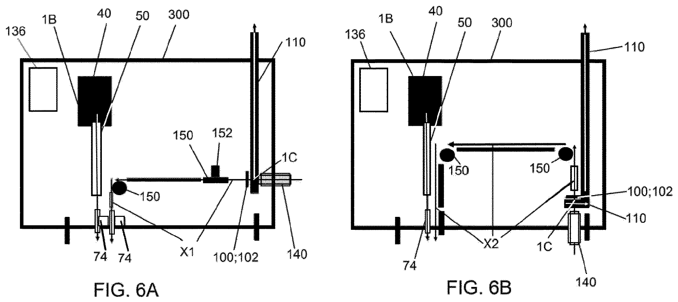

With regard to the positioning of the apparatus 1B in use, it is envisaged that this apparatus may be used either on an onshore location, or in some embodiments located on; or as part of; a nautical craft 300, such as a raft; boat; or catamaran, as is shown with reference to Figures 6A and 6B.

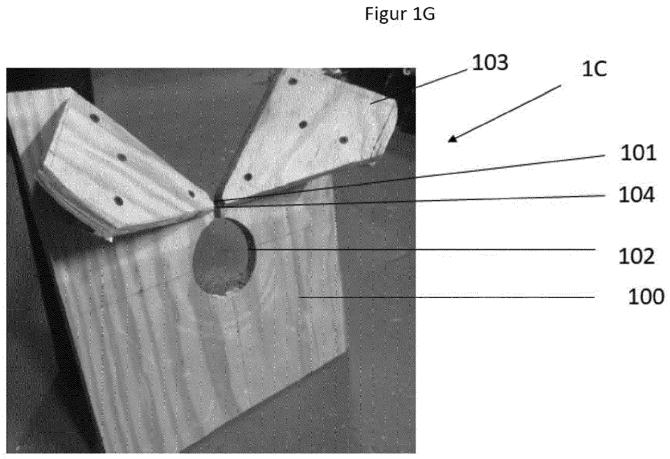

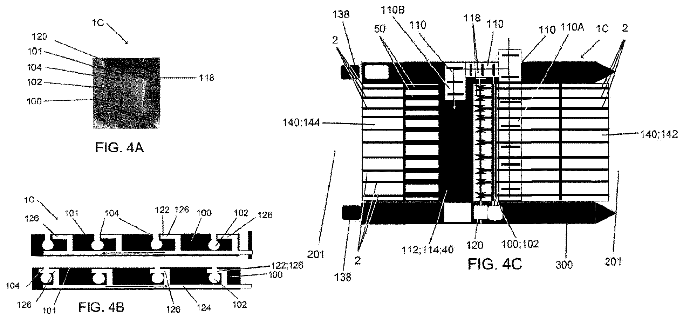

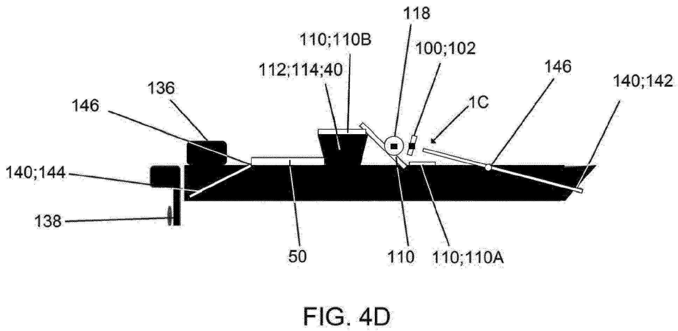

Thus described so far is the seaweed farming construction 1A or 1H (Figures 1A and 1B) for farming seaweed in water, and the apparatus 1B (Figures 2A-2C) for depositing seaweed onto a net 2 that is useable in the seaweed farming construction 1A or 1H. Appreciating the foregoing, now described is an apparatus 1C (Figures 4A and 1G) for at least partially stripping seaweed from a net 2 that has been employed in the seaweed farming construction 1A or 1H, and which contains a sufficient amount of grown seaweed in the net 2 that is ready to be harvested from the net 2. Such an apparatus 1C is best described with reference to the disclosure from Figures 4A-4C, and 1G.

In that respect therefore, provided herein is an apparatus 1C for at least partially stripping seaweed from a net 2 comprising the seaweed, wherein the apparatus 1C comprises at least one harvest plate 100, wherein the harvest plate 100 comprises at least one orifice 102 extending through the harvest plate 100, wherein each orifice 102 is configured to receive a respective net 2 containing seaweed, and is configured to at least partially strip the seaweed from the respective net 2 as the respective net is passed through the orifice 102. Each orifice 102 comprises a respective release channel 104, which extends from the orifice 102 to an edge 101 of the harvest plate 100, for releasing the net 2 from the orifice 102, and for allowing vertical attachment ropes (or at least perpendicular to the net 2) from floating rope array to pass when seaweed on net 2 is being harvested.

In accordance with some embodiments, the harvest plate 100 of the apparatus 1C may be provided with a cylindrical pipe member, such as a cylindrical PVC or other polymer pipe member, substantially with an inner diameter of or smaller than the diameter of the cylindrical net 2, and with an outer diameter that fit the orifice 102, which cylindrical pipe member, preferably with a relatively sharp edge at the end of the pipe, and which pipe member extends perpendicular from orifice 102 configured so that when the net is passed through this pipe member, the seaweed is striped on the edge of this pipe while the net is passed through. Preferably the material of the cylindrical pipe member is relatively thin making the inner and outer diameter almost identical and the edge of the end of the pipe member sharp. In accordance with some embodiments, when such a pipe member is used on a harvest plate 100 of the apparatus 1C, such a pipe will have a slit on top of the pipe along the length of the pipe for the rope attaching the tube net to the floating rope array to pass through.

During the operation of the apparatus 1C, a net 2 (which may be a cylindrical net 2) comprising seaweed 2 is configured to be passed through one of the orifices 102 of the harvest plate 100. As the net 2 then passes through the orifice 102, any seaweed projecting from the net 2 will be caught/engaged against the harvest plate 100 at the edges of the orifice 102. In that way, as the net is passed through the orifice 102, the projecting seaweed from the net 2 will be stripped from the net 2, such that the net will be at least partially stripped of its seaweed 2.

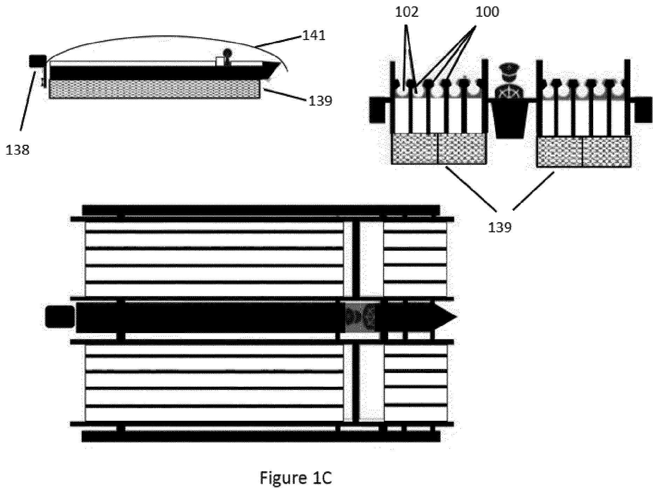

In accordance with some embodiments (Figure 1G), the harvest plate 100 of the apparatus 1C may be provided with a "V" shaped guide and release plus "wings" 103 to guide vertical attachment ropes from floating rope array through the release channel 104. Such an apparatus 1C is to be placed on harvest vessel of figure 1C.

In accordance with some embodiments, there may be provided a conveying device 110, such as a conveyer belt or an inclined channel, which is configured to receive the stripped seaweed from the net 2, and which may be configured to be located underneath and/or in front of the harvest plate 100, as is shown in the embodiment of Figures 4C-4D, 6A and 6B. Once the seaweed has been received in such embodiment by the conveying device 110, some or all of the collected seaweed may be conveyed to another location for further processing and/or storage, such as conveyed to a container (not shown in the Figures) for transporting the seaweed elsewhere.

In accordance with some embodiments, the apparatus 1C may comprise a seaweed depositing apparatus 112 for depositing seaweed onto each net 2 that has been passed through the harvest plate 100, wherein the seaweed depositing apparatus 112 comprises a hopper 114 for holding the seaweed that is to be deposited on each net 2. The purpose of the seaweed depositing apparatus 112 is to effectively re-deposit fresh seaweed into the net 2 that has just been harvested by the harvest plate 100. In that respect, once the net 2 has been re-deposited with fresh seaweed 2 using the seaweed depositing apparatus 112, the net 2 is then ready to be immediately reused, e.g. as part of the seaweed farming construction 1A (such as that shown in Figures 1A and 5).

Where the seaweed depositing apparatus 112 is employed, once the net 2 has passed through the orifice 102 of the harvest plate 100, the net 2 may be fed to the seaweed depositing apparatus 112 directly, i.e. as part of a continuous process. In that way, the net 2 may be configured to pass through the orifice 102 of the harvest plate 100 and then onto the seaweed depositing apparatus 112 without disconnecting the net 2 from the apparatus 1C and/or without needing to stop the apparatus 1C.

In accordance with some other embodiments however, such as that shown in Figures 4A and 4C, once the net 2 has passed through the orifice 102 of the harvest plate 100, the apparatus 1C may comprise a spool 118 for collecting the net 2 that has been passed through the orifice 102 of the harvest plate 100. Once the spool 118 has collected the net 2, the spool 118 comprising the net 2 may be then used for loading the net 2 onto a locating member 50 (or in a particular embodiment the outer surface 70 of the cylindrical sleeve, where the locating member comprises the cylindrical sleeve) shown in Figures 2A-2B, and as will be described with reference to Figures 3A-3D using the net loading apparatus 1D.

Where the spool 118 is present, there may be provided at least one rotatable member 120 for conveying the net 2 onto the spool 118. It is envisaged that the rotatable member 120 may be automatic, such as by it comprising an electric motor, or in some embodiments may be manually operated - for instance by way of the rotatable member 120 comprising a rotatable handle.

In accordance with some embodiments, the seaweed depositing apparatus 112 (shown in Figure 4C) may comprise a substantially similar structure to that of the seaweed depositing apparatus 1B shown in Figures 2A-2C, and may comprise any/all of the features from the seaweed depositing apparatus 1B as required. In that respect for instance, in accordance with some embodiments (such as that shown in Figure 4C), the seaweed depositing apparatus 112 may comprise the hopper 40 for holding the seaweed, wherein the hopper comprises the orifice 42. Similarly, the seaweed depositing apparatus 112 in accordance with some embodiments may comprise the outlet 44 through which the seaweed is configured to be ejected from the apparatus; the conveying device 46; and/or the locating member 50 (which might be a cylindrical member, such as cylindrical sleeve).

Where the hopper 40;114 is employed in the seaweed stripping apparatus 1C, in accordance with some embodiments, any additionally present conveying device 110 may be configured to convey at least a portion of the stripped seaweed from the harvest plate 100 to the hopper 114 which forms part of the seaweed depositing apparatus 112. In such embodiments, the conveying device 110 may comprise a first section 110A proximal the harvest plate 100 and a second section 11B proximal the hopper 40;114, such that the conveying device 110 is configured to convey at least a portion of the stripped seaweed from the harvest plate 100 into the hopper 112.

Turning to the features of the harvest plate 100 itself, in accordance with some embodiments, and particularly those where the net 2 is a cylindrical net 2, each orifice 102 may be circular in cross section. Or, put more generally, in accordance with some embodiments, the cross section/shape of the orifice 100 may match the cross section/shape of the net 2.

As noted above, each orifice 102 comprises a respective release channel 104 for inserting and for releasing the net to and from the orifice 102. The purpose of this release channel 104 is to insert and remove the net 2 from the orifice 102, but may also be to more easily remove the net 2 from the orifice 102/harvest plate 100 when necessary, e.g. if the net 2 gets tangled, or in the case of an emergency where it is necessary to remove the net 2 from the harvest plate 100 in a quick manner. As shown with reference to Figures 4A and 4B, the release channel 104 for each orifice 102 may extend in a direction away from the orifice 102 towards an edge 101 of the harvest plate 100. To further facilitate the removal of any net 2 from the orifice 102 via the release channel 104 in an efficient/quick manner, the release channel 104 in accordance with some embodiments may extend in a radial direction (and/or an upward direction) away from the orifice 102 towards the edge 101 of the harvest plate 100. Some or all of the release channels 104 in some embodiments may be straight or could comprise a tortuous path or a change in direction to better prevent the net 2 from accidentally slipping out from the orifice 102 during the seaweed stripping process.

The presence of the release channel 104 is particularly helpful in embodiments where the harvest plate 100 comprises a plurality of orifices 102, wherein each of the plurality of orifices 102 comprises a respective release channel 104 for inserting and releasing the respective net 2 to and from the orifice 102. In such embodiments, such as that shown in Figures 1C, 4B and 4C, the harvest plate can effectively strip seaweed from a plurality of nets 2 simultaneously. Furthermore, such embodiments allow for the striping of seaweed from the seaweed farming construction 1A or 1H shown in Figures 5 and 1B, which may comprise the plurality of spacer members 20 for spacing the plurality of nets 2 apart from each other. In such net arrangements, the presence of the release channel 104 for each orifice 102 allows the spacer members 20 to pass through the release channels 104 as the net 2 is passed through the orifices 102. In this way, the presence of the release channels 104 allows the net arrangements from Figures 5 and 1B to be stripped of seaweed in a continuous manner, without any interference otherwise caused by the plurality of spacer members 20.

In accordance with the embodiments where the harvest plate 100 comprises the plurality of orifices 102, and respective release channels 104, in some of these embodiments the plurality of orifices may be parallel to each other, and/or the respective release channels for the plurality of orifices may be parallel to each other. Such embodiments would again better cater for net arrangements such as those shown in Figures 5 and 1B, which may comprise the plurality of nets 2 which are parallel to each other.

In some embodiments, such as that shown in Figure 4B, it may be desirable to selectivity close each release channel 104, for instance to prevent a net 2 from accidentally slipping out from the orifice 102 via the release channel 104. That being the case, in accordance with some embodiments, there may be provided a blocking member 122 which is moveable between a first position in which the blocking member 122 does not block each release channel 104, and a second position in which the blocking member 122 blocks each release channel 104 for preventing a net 2 from being released from the respective orifice 102 of the release channel 104. In such embodiments, it will be appreciated that the blocking member 122 might take a variety of possible shapes, though in accordance with some embodiments, the blocking member may be slideable between the first position and the second position. In some embodiments, the blocking member 122 may comprise a support bar 124, and a respective blocking arm 126 for each orifice 102, wherein each blocking arm 126 is connected to the support bar 124 and is configured to block the respective release channel 104 of the respective orifice 102 when the blocking member 122 is moved to the second position, but not block the respective release channel 104 of the respective orifice 102 when the blocking member 122 is moved to the first position.

From the foregoing therefore, described is a method of harvesting seaweed by at least partially stripping seaweed from a net 2 comprising the seaweed using the seaweed stripping apparatus 1C. Using this the seaweed stripping apparatus 1C, the method may comprise passing the net 2 comprising the seaweed through the at least one orifice 102 of the harvest plate 100; and at least partially stripping the seaweed from the net 2 to produce a harvested seaweed as the net 2 is passed through the at least one orifice 102 of the harvest plate 100. In some embodiments thereof, such as those for stripping seaweed from net arrangements similar to those shown in Figures 1A, 1B and 5, the net 2 may be a cylindrical net, wherein the seaweed is located in the cylindrical net 2 and at least partially projects from an outer surface of the cylindrical net 2 prior to the net 2 being passed though the at least one orifice 102 of the harvest plate 100.

In accordance with such methods, and as noted previously, the net may be fed through the seaweeds stripping apparatus 1C as part of a continuous process, such as those as shown in Figures 6A-6B, or 1C with respect to net travel path X1 shown in Figure 6A, and/or net travel path X2 shown in Figure 6B. In that way, the net 2 may be configured to pass through the orifice 102 of the harvest plate 100 without disconnecting the net 2 from the apparatus 1C and/or without needing to stop the seaweeds stripping apparatus 1C.

Alternatively, in some embodiments, once the net 2 has passed through the orifice 102 of the harvest plate 100, the apparatus 1C may comprise a spool 118 for collecting the net 2 that has been passed through the orifice 102 of the harvest plate 100. Once the spool 118 has collected the net 2, the spool 118 comprising the net 2 may be then used for loading the net 2 onto a locating member 50 (or in a particular embodiment the outer surface 70 of the cylindrical member/sleeve) shown in Figures 2A-2B, and as will be described with reference to Figures 3A-3D using the net loading apparatus 1D.

In any case, and in accordance with the above methods, in some embodiments thereof the method may further comprise: stopping the net 2 passing through the at least one orifice 102 of the harvest plate 100; and moving the net 2 through the respective release channel 104 of each orifice 102 to release the net 2 from the at least one orifice 102 of the harvest plate 100. This might be the case, for instance, if the net 2 gets tangled, or in the case of an emergency where it is necessary to remove the net 2 from the harvest plate 100 in a quick manner.

With regard to the positioning of the seaweed stripping apparatus 1C in use, it is envisaged that this apparatus may be used either on an onshore location, or in some embodiments located on; or as part of; a nautical craft 300, such as a raft; boat; or catamaran, as is shown with reference to Figures 4C-4D, 6A, 6B, and 1C. The nautical craft 300 seen in figure 1C may be used in the seaweed farming apparatus 1H as seen in figure 1B.

Moving away from the seaweed stripping apparatus 1C, and turning now to Figures 3A-3D, also described herein is an apparatus 1D for loading a cylindrical net 2 onto the outer/external surface 70 of the locating member 50, which might take the form of a cylindrical member, such as in particular a sleeve. In that respect, in accordance with some embodiments, the net loading apparatus 1D may comprise a cylindrical net 2 wrapped around a spool 118 of the apparatus 1D; a cylindrical member 50 comprising an external surface 70 for receiving the cylindrical net 2 from the spool 118; a clamp 130 attached to the cylindrical member 50 for restricting movement of cylindrical member 50; at least one rotatable member 132 for conveying the cylindrical net 2 off from the spool 118 onto the external surface 70 of the cylindrical member 50; and at least one guiding member 134, located between the spool 118 and the cylindrical member 50, for guiding the net 2 onto the external surface 70 of a cylindrical member 50 as the net is 2 conveyed by the at least one rotatable member 132.

As described above, it will be appreciated that the cylindrical member could in more specific embodiments comprise a cylindrical sleeve (i.e. which might be tubular in nature), or in more general embodiments could be the locating member. Equally, in more generic embodiments to that described above, the net 2 might not necessarily be cylindrical, depending on the intended application of the net 2.

With the above in mind, from the foregoing net loading apparatus 1D, a spool 118 of net 2 (such as the spool 118 taken from the seaweed stripping apparatus 1C shown in Figure 4C) may be used to create a locating member 50 which is loaded with a net 2, such as the locating member 50 shown in the seaweed depositing apparatus 1B shown in Figures 2A-2C. In this way, the net loading apparatus 1D may conveniently and quickly load the net 2 into a position onto the external surface 70 of the locating member/cylindrical member 50, such to make it ready to be used for receiving seaweed from the seaweed depositing apparatus 1B. An example of such a locating member/cylindrical member 50, which is ready to use with the seaweed depositing apparatus 1B, is shown in Figure 3D.

Appreciating the foregoing, in accordance with some embodiments, each rotatable member 132 may comprise a wheel or roller, such as shown in the embodiment of Figures 3A-3C. It is envisaged that each rotatable member 132 may be automatic, such as by it being connected to an electric motor, or in some embodiments may be manually operated - for instance by way of each rotatable member 132 being connected to a rotatable handle for rotating the rotatable member(s) 132.

With respect to the guiding member 134, the exact shape of this guiding member 134 may depend on the relative positioning of the spool 118 with respect to the locating member 50/cylindrical member 50, though in accordance with some embodiments, the guiding member 134 may comprise one or more guide wheels/guide rollers. In some embodiments particularly suited where the net 2 is a cylindrical net 2, to help initially expand the cylindrical net 2 from any collapsed/flattened position thereof when the cylindrical net 2 is on the spool 118, the guiding member may comprise a conical or frusto-conical portion 138 over which the net 2 is configured to be conveyed onto the cylindrical member (or locating member) 50.

Turning to the clamp 130, in accordance with some embodiments, to reduce the likelihood of the net 2 being entangled with the clamp 130, the clamp 130 may be (releasably) located towards a first end 50A of the cylindrical member 50, wherein the guiding member 134 is located at a second end 50B of the cylindrical member 50 which is opposite the first end 50A, as shown in the embodiment of Figure 3B.

In some particular embodiments, that may be suited to the net arrangements shown in Figures 1A, 1B, and 5, the cylindrical member (locating member) 50 may comprise a maximum length L of between 3m-10m. In a more particular embodiment, the cylindrical member may comprise a maximum length L of between 4m-6m.

Similarly, in accordance with some embodiments, the external surface 70 of the cylindrical member (or, more generally, the locating member 50) may be configured to hold between 40m-60m of the cylindrical net per meter length of the cylindrical member 50. In that respect, and with reference to Figures 2A, 2D and 3D, as the cylindrical net off 2 is conveyed onto the external surface 70 of the cylindrical member 50 using the at least one rotatable member 132, a portion 78 of the cylindrical net 2 may become scrunched up (compressed), such to occupy less of the length L of the cylindrical member 50.

In accordance with such embodiments therefore, also provided herein may be a method of loading a cylindrical net 2 onto the external surface 70 of a cylindrical member 50 using the net loading apparatus 1D. Such a method may then comprise conveying a first portion 78 of the cylindrical net off from the spool 118 onto the external surface 70 of the cylindrical member 50 using the at least one rotatable member 132; scrunching the first portion 78 of the cylindrical net 2, on the external surface 70 of the cylindrical member 50, together; and conveying a second portion of the cylindrical net 2 off from the spool 118 onto the external surface 70 of the cylindrical member 50 using the rotatable member 132 such that the second portion is located next to the scrunched up first portion 78 of the cylindrical net 2 on the external surface 70 of the cylindrical member 50.

With regard to the positioning of the net loading apparatus 1D in use, it is envisaged that this apparatus may be used either on an onshore location, or in some embodiments located on; or as part of; a nautical craft 300, such as a raft; boat; or catamaran, such as any of those shown in Figures 1C, 1B, 4C-4D, 6A, and/or6B.

From the foregoing, described herein are seaweed farming techniques and apparatuses, which may employ any of the herein described seaweed farming construction 1A and 1H, seaweed depositing apparatus 1B, seaweed stripping apparatus 1C, and/or net loading apparatus 1D (and in any combinations thereof). As noted previously, with regard to the positioning of the seaweed depositing apparatus 1B, seaweed stripping apparatus 1C, and/or net loading apparatus 1D in use, it is envisaged that that each or all of these apparatuses may be used either on an onshore location, or in some embodiments may be located on; or as part of; a nautical craft 300, such as a raft; boat; or catamaran, such as any of those shown in Figures 1C, 1B, 4C-4D, 6A, and/or6B.

With respect to the nautical craft 300, it is envisaged that this craft 300 may comprise any associated features and/or functionality which may have application alongside any of the described seaweed farming construction 1A, seaweed depositing apparatus 1B, seaweed stripping apparatus 1C, and/or net loading apparatus 1D. In that respect for instance, the nautical craft 300 may comprise a power source 136, such as a battery/motor/engine for electrically powering any of these apparatuses. The nautical craft may also comprise one or more engines 138, such as an outboard engine, for moving the craft 300 in the water 201, as is shown in Figures 1C, 1B, 4C.

In accordance with some embodiments, as shown in Figures 1C, 1B, 4C-4D, the craft 300 may comprise one or more portions 140 which are configured to be at least partially positioned underwater when the craft 300 is located in the water 201, and which are configured to receive the net 2. In some embodiments, the one or more portions 140 may each define a ramped surface. In accordance with some embodiments, the one or more portions 140 may be located at a bow end 142, and/or at a stern end 144, of the craft 300, such to allow the craft 300 to more easily cast out, or pull in, each net 2 containing seaweed via the one or more portions 140. In accordance with some embodiments, each of the one or more portions 140 may be moved or pivoted, such as via a pivoting mechanism 146, between a first position in which the portion 140 is retracted from the water, and a second position in which the portion 140 is at least partially positioned underwater. In this way, when the craft 300 is moving to and from a seaweed harvest site, the one or more portions 140 may be moved to the first position to avoid any water resistance caused by the one or more portions 140 from being at least partially positioned underwater.

As to how any net 2 may be transported around the craft 300, in accordance with some embodiments, the craft may comprise one or more guide members 150 (such as a guide roller, a guide plate, and/or guide wheel) and/or a motor 152 for moving and/or guiding the net 2 around the craft 300. In accordance with some embodiments, at least one of the guide members 150 may be configured to alter the direction of movement of the net 2, as shown with reference to the guide members 150A;150B from Figures 6A and 6B. In some particular embodiments, the direction of movement may be altered by all or each of the guide members 150 by any angular amount, such as by around 90 degrees and/or 180 degrees.

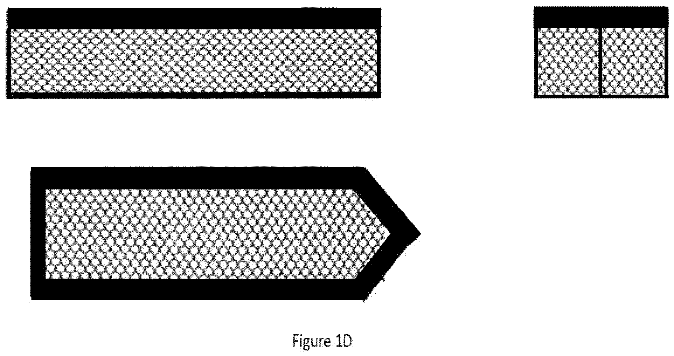

In accordance with some embodiments, as shown in Figure 1C, the craft 300 may be a catamaran comprising an apparatus 1C (such as one of figures 1G or 4A-B) containing a number of harvest holes (orifice 102), such as 5, on one harvest plate on each side of main craft hull. The craft 300 may comprise channels (shown in green in figure 1C) to keep tube nets separated and in line. Operator may sit forward with good visibility of harvest action. The harvest may fall at harvest plate into removable floating net cage 139 (figures 1C and 1D) under each outrigger. The floating net cages may be placed between one or both of the main hull and outside hull of a trimeran or between the hulls of a catamaran to capture harvested seaweed from the tube nets as these passes through harvest plates. The craft may comprise bars (141 in figure 1C) over vessel to guide floating rope array (which tube net is attached to) over the boat during harvest procedure.

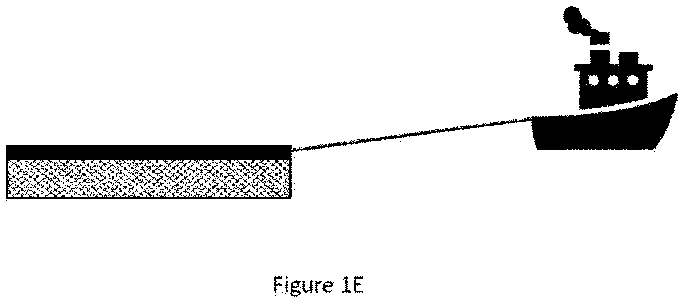

These floating net cages 139 (figures 1C and 1D) which preferably is at least 10m³ in order to hold up to 1,000kg of harvest can preferably be attached and detached to/from the harvest trimaran very quickly and pulled to the shore/beach for unloading (Figure 1E), and when emptied pulled back to farm for reattachment to harvest trimaran. Near or at the beach, such as located on the beach or on a floating platform may be placed a seaweed pump (P), wherein the harvested seaweed is pumped out of floating net cages 139 (figures 1C and 1D) either directly to processing facility or in to a trailer that is then towed by tractor to the drying facility.

Thus, there has been described an apparatus for at least partially stripping seaweed from a net comprising the seaweed, wherein the apparatus comprises at least one harvest plate, wherein the harvest plate comprises at least one orifice extending through the harvest plate, wherein each orifice is configured to receive a respective net containing seaweed, and is configured to at least partially strip the seaweed from the respective net as the respective net is passed through the orifice; wherein each orifice comprises a respective release channel, which extends from the orifice to an edge of the harvest plate, for releasing the net from the orifice.

There has also been described a method of harvesting seaweed by at least partially stripping seaweed from a net comprising the seaweed using the apparatus described in the present disclosure (e.g., apparatus for at least partially stripping seaweed from a net comprising the seaweed), wherein the method comprises: passing the net comprising the seaweed through the at least one orifice of the harvest plate; and at least partially stripping the seaweed from the net to produce a harvested seaweed as the net is passed through the at least one orifice of the harvest plate.

In some embodiments, the harvested seaweed is subjected to a post-harvest treatment. In some embodiments, the post-harvest treatment is performed prior to a drying step. The suitable post-harvest treatments include known methods in the art such as washing, preserving treatments, color removal treatments, and odor removal treatments.

In some embodiments, the harvested seaweed is subjected to a drying step, that is, the harvested seaweed is dried. In some embodiments, the harvested seaweed is dried at a temperature of from about 35°C to about 120°C. Drying the harvested seaweed is advantageous as this brings improved stability against decay of seaweed components during the periods of storage before and during the transport to a manufacturing facility. It is preferable to dry the harvested seaweed until moisture content below 45% (w/w) is achieved. It is preferable to dry the harvested seaweed to moisture content of not more than 40% (w/w), and most preferable to dry the harvested seaweed to moisture content of not more than 30% (w/w). The methods of drying include but not limited to sun drying. Sun drying refers to use of solar radiation as the main source of energy to reduce water content from a material.

In some embodiments, the harvested seaweed prior to and/or after the drying step can be washed. The washing process refers to exposing surfaces of seaweed to water which can remove matter such as impurities, salt, debris, and sand. The water used in the washing step can be sea water, fresh water, or combinations thereof.

In some embodiments, the dried harvested seaweed is milled. Milling refers to comminution of a dried material to obtain fine particles, and it can be achieved by means known in the art. Suitable methods of milling include but are not limited to grinding, dry milling, ball milling, jet milling. Preferably the milling method provides particle size below 250 microns.

There is further described a nautical craft, such as a raft or boat, such as a trimaran, comprising one or more of the apparatuses as set out above.

## Claims

1. An apparatus for at least partially stripping seaweed from a net comprising the seaweed, wherein the apparatus comprises at least one harvest plate, wherein the harvest plate comprises at least one orifice extending through the harvest plate, wherein each orifice is configured to receive a respective net containing seaweed, and is configured to at least partially strip the seaweed from the respective net as the respective net is passed through the orifice;
the apparatus being **characterised in that** each orifice comprises a respective release channel, which extends from the orifice to an edge of the harvest plate, for releasing the net from the orifice.

2. An apparatus according to claim 1, wherein each orifice is circular in cross section.

3. An apparatus according to claim 1 or 2, wherein the harvest plate comprises a plurality of orifices, wherein each of the plurality of orifices comprises a respective release channel for releasing the respective net from the orifice.

4. An apparatus according to any preceding claim, further comprising a conveying device configured to receive the stripped seaweed, wherein the conveying device is at least partially located underneath the harvest plate.

5. A method of harvesting seaweed by at least partially stripping seaweed from a net comprising the seaweed using the apparatus of any preceding claim, wherein the method comprises:
passing the net comprising the seaweed through the at least one orifice of the harvest plate; and
at least partially stripping the seaweed from the net to produce a harvested seaweed as the net is passed through the at least one orifice of the harvest plate.

6. A method according to claim 5, wherein the net is a cylindrical net, wherein the seaweed is located in the cylindrical net and at least partially projects from an outer surface of the cylindrical net prior to the net being passed though the at least one orifice of the harvest plate.

7. A method according to claim 5 or 6, wherein the method further comprises:
stopping the net passing through the at least one orifice of the harvest plate; and
moving the net through the respective release channel of each orifice to release the net from the at least one orifice of the harvest plate.

8. A method according to any one of claims 5-7, further comprising subjecting the harvested seaweed to a post-harvest treatment.

9. A method according to claim 8, wherein the post-harvest treatment is selected from the group consisting of washing, preserving treatments, color removal treatments, odor removal treatments, and combinations thereof.

10. A method according to any one of claims 5-9, further comprising drying the harvested seaweed.

11. A method according to claim 10, wherein the harvested seaweed is sun dried.

12. A method according to claim 10 or 11, further comprising washing the dried harvested seaweed.

13. A method according to any one of claims 10-12, further comprising milling the dried harvested seaweed.

14. A nautical craft, such as a raft or boat, such as a trimaran, comprising the apparatus of any one of claims 1-4.

## Patentansprüche

1. Vorrichtung zum mindestens teilweisen Abstreifen von Algen von einem Netz, das die Algen umfasst, wobei die Vorrichtung mindestens eine Ernteplatte umfasst, wobei die Ernteplatte mindestens eine Öffnung umfasst, die sich durch die Ernteplatte erstreckt, wobei jede Öffnung dazu ausgelegt ist, ein jeweiliges Netz aufzunehmen, das Algen enthält, und dazu ausgelegt ist, die Algen mindestens teilweise von dem jeweiligen Netz abzustreifen, wenn das jeweilige Netz durch die Öffnung geführt wird;
wobei die Vorrichtung **dadurch gekennzeichnet ist, dass** jede Öffnung jeweils einen Freigabekanal aufweist, der sich von der Öffnung zu einem Rand der Ernteplatte erstreckt, um das Netz aus der Öffnung zu lösen.

2. Vorrichtung nach Anspruch 1, wobei jede Öffnung einen kreisförmigen Querschnitt aufweist.

3. Vorrichtung nach Anspruch 1 oder 2, wobei die Ernteplatte mehrere Öffnungen umfasst, wobei jede der mehreren Öffnungen einen jeweiligen Freigabekanal zum Freigeben des jeweiligen Netzes aus der Öffnung umfasst.

4. Vorrichtung nach einem der vorhergehenden Ansprüche, die ferner eine Fördervorrichtung umfasst, die dazu ausgelegt ist, die abgestreiften Algen aufzunehmen, wobei sich die Fördervorrichtung zumindest teilweise unter der Ernteplatte befindet.

5. Verfahren zum Ernten von Algen durch mindestens teilweises Abstreifen von Algen von einem Netz, das die Algen umfasst, unter Verwendung der Vorrichtung nach einem der vorhergehenden Ansprüche, wobei das Verfahren Folgendes umfasst:
Führen des Netzes, das die Algen umfasst, durch die mindestens eine Öffnung der Ernteplatte; und
zumindest teilweises Abstreifen der Algen von dem Netz, um geerntete Algen zu erzeugen, während das Netz durch die mindestens eine Öffnung der Ernteplatte geführt wird.

6. Verfahren nach Anspruch 5, wobei das Netz ein zylindrisches Netz ist, wobei sich die Algen in dem zylindrischen Netz befinden und mindestens teilweise aus einer Außenfläche des zylindrischen Netzes herausragen, bevor das Netz durch die mindestens eine Öffnung der Ernteplatte geführt wird.

7. Verfahren nach Anspruch 5 oder 6, wobei das Verfahren ferner Folgendes umfasst:
Stoppen des Durchführens des Netzes durch die mindestens eine Öffnung der Ernteplatte; und
Bewegen des Netzes durch den jeweiligen Freigabekanal jeder Öffnung, um das Netz aus der mindestens einen Öffnung der Ernteplatte freizugeben.

8. Verfahren nach einem der Ansprüche 5-7, das ferner umfasst, die geernteten Algen einer Nacherntebehandlung zu unterziehen.

9. Verfahren nach Anspruch 8, wobei die Nacherntebehandlung aus der Gruppe ausgewählt wird, die besteht aus Waschen, Konservierungsbehandlungen, Farbentfernungsbehandlungen, Geruchsentfernungsbehandlungen und Kombinationen davon.

10. Verfahren nach einem der Ansprüche 5-9, ferner umfassend Trocknen der geernteten Algen.

11. Verfahren nach Anspruch 10, wobei die geernteten Algen sonnengetrocknet werden.

12. Verfahren nach Anspruch 10 oder 11, ferner umfassend Waschen der getrockneten geernteten Algen.

13. Verfahren nach einem der Ansprüche 10-12, ferner umfassend Mahlen der getrockneten geernteten Algen.

14. Seefahrzeug, wie etwa ein Floß oder Boot, wie etwa ein Trimaran, umfassend die Vorrichtung nach einem der Ansprüche 1-4.

## Revendications

1. Appareil pour retirer au moins partiellement les algues d'un filet comprenant les algues, l'appareil comprenant au moins une plaque de récolte, la plaque de récolte comprenant au moins un orifice s'étendant à travers la plaque de récolte, chaque orifice étant conçu pour recevoir un filet respectif contenant des algues, et étant conçu pour retirer au moins partiellement les algues du filet respectif lorsque le filet respectif passe à travers l'orifice ;
l'appareil étant **caractérisé en ce que** chaque orifice comprend un canal de libération respectif, qui s'étend de l'orifice à un bord de la plaque de récolte, pour libérer le filet de l'orifice.

2. Appareil selon la revendication 1, chaque orifice ayant une section transversale circulaire.

3. Appareil selon la revendication 1 ou 2, la plaque de récolte comprenant une pluralité d'orifices, chacun de la pluralité d'orifices comprenant un canal de libération respectif pour libérer le filet respectif de l'orifice.

4. Appareil selon l'une quelconque des revendications précédentes, comprenant en outre un dispositif de transport conçu pour recevoir les algues retirées, le dispositif de transport étant au moins partiellement situé sous la plaque de récolte.

5. Procédé de récolte d'algues par le retrait au moins partiel des algues d'un filet comprenant les algues à l'aide de l'appareil selon l'une quelconque des revendications précédentes, le procédé comprenant les étapes consistant à :
passer le filet comprenant les algues à travers l'au moins un orifice de la plaque de récolte ; et
retirer au moins partiellement les algues du filet pour produire une algue récoltée lorsque le filet passe à travers l'au moins un orifice de la plaque de récolte.

6. Procédé selon la revendication 5, le filet étant un filet cylindrique, l'algue étant située dans le filet cylindrique et faisant saillie au moins partiellement d'une surface extérieure du filet cylindrique avant que le filet ne passe à travers l'au moins un orifice de la plaque de récolte.

7. Procédé selon la revendication 5 ou 6, le procédé comprenant en outre les étapes consistant à :
arrêter le filet passant à travers l'au moins un orifice de la plaque de récolte ; et
déplacer le filet à travers le canal de libération respectif de chaque orifice pour libérer le filet de l'au moins un orifice de la plaque de récolte.

8. Procédé selon l'une quelconque des revendications 5 à 7, comprenant en outre l'étape consistant à soumettre les algues récoltées à un traitement post-récolte.

9. Procédé selon la revendication 8, le traitement post-récolte étant choisi dans le groupe constitué par un lavage, des traitements de conservation, des traitements d'élimination de couleur, des traitements d'élimination d'odeur et des combinaisons de ceux-ci.

10. Procédé selon l'une quelconque des revendications 5 à 9, comprenant en outre l'étape consistant à sécher les algues récoltées.

11. Procédé selon la revendication 10, les algues récoltées étant séchées au soleil.

12. Procédé selon la revendication 10 ou 11, comprenant en outre l'étape consistant à laver les algues récoltées séchées.

13. Procédé selon l'une quelconque des revendications 10 à 12, comprenant en outre l'étape consistant à broyer les algues récoltées séchées.

14. Engin nautique, tel qu'un radeau ou un bateau, tel qu'un trimaran, comprenant l'appareil selon l'une quelconque des revendications 1 à 4.
